(19) Europäisches Patentamt
European Patent Office
Office européen des brevets

(11) Veröffentlichungsnummer: **0 111 924**
**B1**

(12) # EUROPÄISCHE PATENTSCHRIFT

(45) Veröffentlichungstag der Patentschrift: **15.02.89**

(51) Int. Cl.⁴: **C 01 B 6/04,** C 01 B 33/04, C 01 B 33/04, C 07 F 7/08, C 01 B 6/04

(21) Anmeldenummer: **83112798.0**

(22) Anmeldetag: **20.12.83**

(54) **Verfahren zur Herstellung von Siliciumwasserstoff-Verbindungen, insbesondere des Silans.**

(30) Priorität: **22.12.82 DE 3247362**

(43) Veröffentlichungstag der Anmeldung: **27.06.84 Patentblatt 84/26**

(45) Bekanntmachung des Hinweises auf die Patenterteilung: **15.02.89 Patentblatt 89/7**

(84) Benannte Vertragsstaaten: **AT BE CH DE FR GB IT LI LU NL**

(56) Entgegenhaltungen: **EP-A-0 003 564** **GB-A-909 950**

(73) Patentinhaber: **Studiengesellschaft Kohle mbH, Kaiser- Wilhelm- Platz 1, D-4330 Mülheim/Ruhr (DE)**

(72) Erfinder: **Bogdanovic, Borislav, Dr. Dipl.- Chem. Prof., Kaiser- Wilhelm- Platz 1, D-4330 Mühlheim/Ruhr (DE)**

(74) Vertreter: **von Kreisler, Alek, Dipl.- Chem., Deichmannhaus am Hauptbahnhof, D-5000 Köln 1 (DE)**

EP 0 111 924 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft ein Verfahren zur Herstellung von Siliciumwasserstoff-Verbindungen, insbesondere des Silans ($SiH_4$), das zur Herstellung von hochreinem Silicium technische Anwendung findet.

Von den beiden gängigen Methoden zur Synthese des Silans, der protolytischen Zersetzung des Magnesiumsilicids ($Mg_2Si$) und der Reaktion von Tetrachlorsilan mit Metallhydriden (Gmelin's Handbuch d. Anorg. Chem., Si, Suppl. B 1, S. 59 (1982), hat die letztere u.a. den Vorteil, daß das Silan frei von unerwünschten Verunreinigungen, insbesondere von höheren Silanen, gewonnen werden kann.

Seit der Entdeckung des Lithiumaluminiumhydrids und dessen Anwendung zur Synthese von Metall- bzw. Elementhydriden (Finholt, Bond, Wilzbach u. Schlesinger, J. Amer. Chem. Soc. 69, 2962 (1947)) gilt die Reaktion von $SiCl_4$ mit $LiAlH_4$ als die beste und einfachste Laboratoriumsmethode zur Erzeugung von Silan (Norman, Webster, Jolly, Inorg. Syn. 11, 170 (1968)). Das nach dieser Methode dargestellte Silan eignet sich zur Erzeugung von Silicium für die Halbleiter- und Solarzellen-Industrie, da es frei von Borwasserstoff-Verbindungen und höheren Silanen anfällt (Gmelin's Handbuch, loc.cit S. 63). Für die technische Anwendung dieser Reaktion in größerem Maßstab wirkt sich jedoch der relativ hohe Preis des Lithiumaluminiumhydrids nachteilig aus. Es hat daher in den letzten 20 - 25 Jahren nicht an Versuchen gefehlt, das für den Zweck geeignete, jedoch teure $LiAlH_4$ durch preiswertere, ggfls. komplexe Metallhydride zu ersetzen. Nach Zakharkin et al (Bull. Acad. Sci. (UdSSR), Div. Chem. Sci. 1962, 1784) und Antipin et al (J. Appl. Chem. (UdSSR) 42. 416 (1969)) reagieren $SiCl_4$, $HSiCl_3$ und Alkoxysilane mit $NaAlH_4$ bzw. $KAlH_4$ in THF oder Diglyme bereits bei tiefen Temperaturen unter Bildung von Silan in guten Ausbeuten. Über die technische Anwendung dieser Methode zur Synthese von Silan ist nichts bekannt.

Im Zusammenhang mit der vorliegenden Erfindung ist die Tatsache von Bedeutung, daß die einfachen, binären Hydride der Alkali- und Erdalkalimetalle wie NaH, $MgH_2$ und $CaH_2$ bisher nicht als solche, sondern nur nach Umwandlung in Komplexhydride des Aluminiums (durch Reaktion mit $AlCl_3$ : GB-A-832 333, C.A. 16765 (1960), Vit er al, Czech. 126672 (1962/68), C.A. 70, 39392 (1969)) oder in Gegenwart von Aktivatoren bzw. Katalysatoren zur Herstellung von Silan eingesetzt werden konnten. Die Ursache hierfür liegt vermutlich in der geringen Löslichkeit und/oder Reaktivität der bei hohen Temperaturen und Drucken aus den Elementen hergestellten, binären Metallhydride. Als Katalysatoren für die Reaktion von NaH, $CaH_2$ oder $MgH_2$ mit $SiCl_4$ wurden Zinkhalogenide, -hydride und -alkyle oder Zinkoxid (GB-A-909 950, C.A. 58 (1963) 215) oder Zinkmetall bzw. Zinklegierungen (US-A-3 050 366, C.A. 58 (1963) 280) empfohlen. Das für die Reaktion von $SiCl_4$ mit z. B. NaH in THF als "Katalysator" benötigte $ZnCl_2$ wird hierbei jedoch im Molverhältnis von $ZnCl_2 : SiCl_4 = 1 : 2$, d.h. in praktisch stöchiometrischer Menge eingesetzt. Für den Einsatz von NaH zur Erzeugung von $SiH_4$ aus $SiCl_4$ werden als Katalysatoren bzw. Aktivatoren außerdem Bor- bzw. Aluminiumalkyle (DE-C-1 034 159, C.A. 56, 16764; Jenkner, Chemiker Ztg. 85, 264/72 (1961)) sowie Bor- bzw. Aluminiuimhydride (DE-C-1 085 505, C.A. 21505 (1961) und DE-C-1 096 341, C.A. 26388 (1961)) empfohlen, wobei die Gefahr besteht, daß das dabei erhaltene Silan die unerwünschten Alkylsilane (bei $AlR_3$ als Aktivatoren) oder Borverbindungen (bei Bor-Aktivatoren) als Verunreinigungen enthält. Nach der SU-A-126 672, C.A. 84 166812 (1976) entfallen allerdings diese Nachteile bei Verwendung von $NaAlH_4$ als Aktivator.

Besonders hingewiesen sei auf die Versuche zur Darstellung von Silan $SiH_4$ unter Verwendung von Magnesiumhydrid, die in der GB-A-909 950 beschrieben sind. Es wird darin jedoch ausdrücklich festgestellt, daß sich Magnesiumhydride zur Darstellung hochreinen Silans durch Reaktion mit Halogensilanen nicht eignen.

Aus dem Dargelegten geht hervor, daß für den Einsatz von binären Metallhydriden zur Erzeugung von Silan durch Reaktion mit Halogensilanen bisher keine einfache und kostengünstige technische Lösung vorliegt.

Nach der EP-A-0 003 564 läßt sich jedoch metallisches Magnesium mit Hilfe von homogenen Übergangsmetallkatalysatoren unter milden Reaktionsbedingungen zu Magnesiumhydrid hydrieren, das im Gegensatz zum Magnesiumhydrid, hergestellt nach der herkömmlichen Methode (Hochtemperaturhydrierung), eine hohe Reaktivität aufweist.

Es handelt sich dabei um ein Verfahren, in dem man Magnesium in Gegenwart eines Katalysators, bestehend aus einem Halogenid eines Metalls der IV. bis VIII. Nebengruppe des periodischen Systems und einer magnesiumsorganischen Verbindung bzw. eines Magnesiumhydrids sowie ggfls. in Gegenwart eines policyclischen Aromaten oder eines tertiären Amins sowie ggfls. in Gegenwart eines Magnesiumhalogenids $MgX_2$ mit X = Cl, Br, J, mit Wasserstoff umsetzt.

Es wurde nun überraschenderweise gefunden, daß sich das nach dieser Methode leicht zugängliche Magnesiumhydrid in hervorragender Weise zur Erzeugung von Silanen aus Tetrachlorsilan oder anderen Chlorsilanen eignet, wobei keine weiteren Katalysatoren bzw. Aktivatoren erforderlich sind.

Die Reaktion verläuft in einem cyclischen oder linearen Ether oder einem Polyether wie THF oder Glyme als Lösungsmittel bereits bei Raumtemperatur oder bei leicht erhöhter

Temperatur (50 - 70° C) und liefert die entsprechenden Silane in hohen Ausbeuten.

In Kombination mit der genannten Synthese von Magnesiumhydrid ergibt sich damit eine Zweistufensynthese von Silan aus den billigen Rohstoffen Mg, $H_2$ und z. B. $SiCl_4$:

$$Mg + H2 \xrightarrow[\text{Aktivator}]{\text{Katalysator}} Mg_2$$

$$2\, MgH_2 + SiCl_4 \longrightarrow SiH_4 + 2\, MgCl_2.$$

Ein weiterer Vorteil dieser Methode ist, daß die Hydrierung von Magnesium und die anschließende Reaktion von $MgH_2$ mit $SiCl_2$ in einem Eintopfverfahren in z. B. THF als Reaktionsmedium durchgeführt werden kann.

Es besteht jedoch auch die Möglichkeit, daß das nach der EP-A-0 003 564 hergestellte $MgH_2$ in fester Form isoliert und anschließend in einem anderen geeigneten Lösungsmittel zur Reaktion mit Chlorsilanen, z. B. $SiCl_4$ eingesetzt wird.

Die Erfindung wird durch die folgenden Beispiele näher erläutert, ohne jedoch auf sie beschränkt zu sein.

**Beispiel 1**

In einer Apparatur, bestehend aus einem 100 ml Dreihalskolben, der mit einem Tropftrichter, Innenthermometer, Magnetrührer und Kühlfinger (-78° C) ausgestattet und an eine Gasbürette, gefüllt mit Quecksilber, angeschlossen war, wurden 0,68 g des nach der EP-A-0 003 564 mit dem Ti-Katalysator hergestellten Magnesiumhydrids unter Argon vorgelegt und mit 20 ml abs. THF überschichtet. Eine Lösung von 1,04 g (0,7 ml, 6,1 mmol) $SiCl_4$ in 20 ml THF wurde bei Raumtempeatur und unter Rühren zur $MgH_2$-Suspension zugetropft. Die Reaktionsmischung wurde langsam erwärmt, wobei ab ca. 40° C die Gasentwicklung einsetzte, die mit Hilfe der Gasbürette gemessen wurde. Durch die Reaktionswärme stieg die Temperatur der Reaktionsmischung vorübergehend bis auf 65° C an. Nach Beendigung der Reaktion betrug die Gasentwicklung 134 ml (20° C, 1 bar). Die MS-Anylse des Gases ergab einen Anteil an $SiH_4$ von 20,9 Mol-% (Rest Argon). Unter Berücksichtigung des Gesamtvolumens der Apparatur errechnete sich daraus eine $SiH_4$-Ausbeute von 80 %.

**Beispiel 2**

Der Versuch wurde analog Beispiel 1 durchgeführt, wobei eine in situ erzeugte Suspension von $MgH_2$ in THF (Ti-Katalysator) verwendet wurde. Die Reaktion von $MgH_2$ mit $SiCl_4$ unter Bildung von $SiH_4$ verlief in diesem Falle bereits bei 25 - 28° C. Die Ausbeute an $SiH_4$ betrug 76 %.

**Beispiel 3**

In einer Apparatur, bestehend aus einen 1 l Dreihalskolben, der mit einem Tropftrichter, Innenthermometer, Magnetführer und Rückflußkühler (Methanol 10° C) ausgestattet und an eine Kühlfalle (-78° C) angeschlossen war, wurden 18,56 g des nach der EP-A-0 003 564 (Ti-Katalysator) hergestellten Magnesiumhydrids unter Argon vorgelegt und mit 250 ml abs. Glyme überschichtet. Eine Lösung von 107,20 g (126 ml, 0,99 mol) $(CH_3)SiCl$ in 100 ml Glyme wurde während 3 h und unter Rühren der $MgH_2$-Suspension zugetropft, wobei die Temperatur der Mischung bis auf 25 - 27° C anstieg. Nach beendeter $(CH_3)SiCl$-Zugabe wurde das Reaktionsgemisch im Argonstrom kurzzeitig auf Siedetemperatur erhitzt. Die Ausbeute des in der Kühlfalle einkondensierten Trimethylsilans (Sdp. 6,7° C) betrug 80 %.

**Patentansprüche**

1. Verfahren zur Herstellung von Siliciumwasserstoff-Verbindungen, insbesondere des Silans ($SiH_4$) aus Halogensilanen, dadurch gekennzeichnet, daß man Halogensilane, insbesondere Tetrachlorsilan, in einem Lösungsmittel in Abwesenheit zusätzlicher Katalysatoren und/oder Aktivatoren mit Magnesiumhydrid reagieren läßt, das dadurch erhalten wird, daß man Magnesium in Gegenwart eines Katalysators bestehend aus einem Halogenid eines Metalls der IV. bis VIII. Nebengruppe des periodischen Systems und einer magnesiumsorganischen Verbindung bzw. eines Magnesiumhydrids sowie ggfls. in Gegenwart eines policyclischen Aromaten oder eines tertiären Amins sowie ggfls. in Gegenwart eines Magnesiumhalogenids $MgX_2$ mit X = Cl, Br, J, mit Wasserstoff umsetzt.

2. Verfahren nach Anspruch 1, dadurch gekennzeichnet, daß als Lösungsmittel offenkettige und cyclische Mono- und Polyether, bevorzugt THF oder Glykoldimethylether, verwendet werden.

3. Verfahren nach Ansprüchen 1 und 2, dadurch gekennzeichnet, daß die Reaktion im Temperaturbereich von 0 bis 150° C, bevorzugt von 20 bis 70° C durchgeführt wird.

4. Verfahren nach Ansprüchen 1 - 3, dadurch gekennzeichnet, daß die Hydrierung des Magnesiums und die anschließende Reaktion des Magnesiumhydrids mit Chlorsilanen, bevorzugt Tetrachlorsilan, in einem Eintopfverfahren durchgeführt wird.

## Claims

1. Process for the preparation of silicon hydride compounds, in particular of silane ($SiH_4$) from halogen silanes, characterised in that halogen silanes, in particular tetrachlorosilane, are reacted with magnesium hydride in a solvent in the absence of additional catalysts and/or activators, which magnesium hydride is obtained by reacting magnesium with hydrogen in the presence of a catalyst consisting of a halide of a metal of sub-Groups IV to VIII of the periodic System and of an organic magnesium compound or of a magnesium hydride and optionally in the presence of a polycyclic aromatic compound or of a tertiary amine and optionally in the presence of a magnesium halide $MgX_2$ where X = Cl, Br, I.

2. Process according to claim 1, characterised in that open chained and cyclic mono- and polyethers, preferably THF or glycol dimethylether, are used as solvents.

3. Process according to claims 1 and 2, characterised in that the reaction is carried out in the temperature range of from 0 to 150° C, preferably from 20 to 70° C.

4. Process according to claims 1 to 3, characterised in that the hydrogenation of magnesium and the subsequent reaction of magnesium hydride with chlorosilanes, preferably tetrachlorosilane, are carried out as a one pot process.

## Revendications

1. Procédé de préparation des composés contenant du silicium et de l'hydrogène (hydrure de silicium), en particulier du silane ($SiH_4$) à partir d'halogénosilanes, caractérisé en ce qu'on fait réagir des halogéno-silanes, en particulier du tétrachlorosilane, dans un solvant en l'absence de catalyseurs et/ou d'activateurs supplémentaires avec de l'hydrure de magnésium qui a été obtenu par la réaction, avec l'hydrogène, du magnésium en présence d'un catalyseur consistant en un halogénure d'un métal des sous groupes IV à VIII du système ou tableau périodique des éléments et d'un composé organique de magnésium ou d'un hydrure de magnésium ainsi qu'éventuellement en présence d'un hydrocarbure aromatique polycyclique ou d'une amine tertiaire ainsi qu'éventuellement en présence d'un halogénure de magnésium $MgX_2$, dans lequel X représente Cl, Br ou I.

2. Procédé selon la revendication 1, caractérisé en ce qu'on utilise comme solvant des monoéthers et des polyéthers en chaîne droite et cyclique, de préférence THF ou l'éther diméthylique du glycol.

3. Procédé selon les revendications 1 et 2, caractérisé en ce qu'on conduit la réaction dans un intervalle de la température allant de 0 à 150° C, de préférence de 20 à 70° C.

4. Procédé selon les revendications 1 à 3, caractérisé en ce qu'on conduit l'hydrogénation du magnésium et la réaction subséquente de l'hydrure de magnésium avec des chlorosilanes, de préférence le tétrachlorosilane, dans un procédé mis en oeuvre dans un seul récipient.